# EUROPEAN PATENT SPECIFICATION

(11) **EP 0 943 728 B1**
(45) Date of publication and mention of the grant of the patent: **06.11.2002**
(21) Application number: 99301655.9
(22) Date of filing: 05.03.1999
(51) Int. Cl.: D06N 7/00, B29B 17/00, B32B 31/30

(54) **A process of recycling waste polymeric material and an article utilizing the same**
Verfahren zur Wiederverwertung von polymeren Abfallstoffen und ein daraus hergestelltes Produkt
Procédé de recyclage des déchets en matériau polymère et un produit résultant

(30) Priority: 16.03.1998 US 39913
(43) Date of publication of application: 22.09.1999
(73) Proprietor: Collins & Aikman Floorcoverings, Inc., Dalton, Georgia 30722 (US)
(72) Inventor: Grizzle, Mark L., Dalton, Georgia 30720 (US); Weinle, Paul L., Concord, North Carolina 28027 (US); Preston, Lynn E., Cartersville, Georgia 301221 (US); Zegler, Stephen A., Dalton, Georgia 30722 (US)
(74) Representative: Bankes, Stephen Charles Digby

(56) References cited:
- EP-A- 0 590 189
- EP-A- 0 867 557
- EP-A- 0 891 848
- US-A- 4 003 866
- US-A- 4 968 463
- US-A- 5 294 384
- US-A- 5 560 797
- US-A- 5 604 025
- US-A- 5 728 741
- US-A- 5 855 981

## Description

The present invention relates to recycling and reclaiming waste polymeric material, and forming an article therefrom, and more particularly forming a floor covering utilizing the recycled and reclaimed waste polymeric material.

There has been an increased interest in recycling, reclaiming and reutilizing waste and scrap material, and particularly waste thermoplastic polymeric material from a variety of sources. The recycling of most mixtures of thermoplastic scrap material is limited by the incompatibility of the various different kinds of thermoplastic and non-thermoplastic material present in the scrap. For example, the various thermoplastic resins are often insoluble in each other resulting in a heterogeneous mixture in which each type of resin forms a dispersed phase in the other. This often adversely affects the mechanical properties (e.g. tensile and impact strength) and aesthetic properties of any articles formed from such a mixture.

One suggestion to overcome this problem is to sort the scrap material based on the specific thermoplastic material present. Such sorting, however, is often impractical from both a technical and economic standpoint. Thus, various other solutions have been proposed with respect to recycling waste polymeric material. For example, U.S. Patent No. 4,250,222 to Mavel et al. proposes coarsely grinding a mixture of two or more mutually incompatible thermoplastic resins, incorporating into the coarsely ground thermoplastic resin mixture, through the application of heat and pressure, from about 5 to about 25 parts of weight of a fibrous material, and forming the resin/fiber mass into an article.

U.S. Patent No. 4,968,462 to Levasseur proposes shredding or granulating polymeric waste, drying the material to a water content of not more than 8% by weight, preheating the material to a temperature of 80° C to 160° C, kneading at a temperature of 120°C to 250° C and injection molding or extruding the material to form a product such as a fence post.

Processes for recycling floor covering have also been desired inasmuch as a particularly large amount of scrap material is generated during the manufacture of floor covering. For example, in the manufacture of tufted carpet, the tufted carpet may have nylon pile secured in a primary backing of a woven polypropylene fabric, which has a secondary vinyl plastic backing. The pile, the primary backing and secondary backing are typically each a thermoplastic having different characteristics.

Specific to recycling carpet, US-A-4,028,159 to Norris proposes a process for reclaiming selvedge formed during manufacturing. The process comprises heating the selvedge in air to a temperature above the melting points of the resins to melt and degrade the resins; separating melted resin from solid residue to reclaim meltable resin from the selvedge; and utilizing the reclaimed resins as a substitute for at least a portion of the high molecular weight resins in an adhesive mixture in subsequent carpet production.

US-A-4,158,645 to Benkowski et al proposes applying a shearing force (e.g. using a Banbury mixer) to tear the fabric fibers into lengths no greater than about 6.35 mm (0.25 inch). This forms a mixture of thermoplastic-resin and short lengths of fabric fibers. The resulting mixture is subjected to heat and pressure, such as by a drop mill and thus banded. After the mixture is banded, it can be calendared onto a web of fabric to form a finished reinforced sheet or extruded into various continuous forms such as sheets or strips. The process is described as being particularly useful as applied to scrap polyvinyl chloride sheet material reinforced with cotton fabric.

US-A-4,003,866 discloses a method of making a construction material from recycled plastics waste, in which waste material comprising different plastics materials is comminuted, mixed with fillers such as asbestos and extruded into various shapes.

EP-A-0590189 discloses carpet tiles having a backing member made from a regenerated product of a propylene resin, preferably from recycled carpet material.

These processes of recycling or reclaiming scrap material, however, are not entirely successful and have not found widespread usage because of economic infeasibility and limitations on the types of article, which can be made. Thus, it is among the objects of the invention to provide an improved process of recycling, reclaiming, and reutilizing scrap material, and particularly thermoplastic scrap material from the manufacture of floor covering or the subsequent removal of the floor covering after installation.

EP-A-0891848, which constitutes prior art in relation to the present application by virtue of Article 54(3) EPC, discloses a process for recycling waste polymeric material containing up to 40% aliphatic polyamide material, which comprises chopping a mixture of such materials, granulating the chopped mixture into fragments smaller that the original size of the waste polymeric material, densifying, pelletizing and extruding the material and shaping it to form an article of manufacture such as a secondary backing for a carpet or carpet tile.

According to a first aspect of the invention there is provided a method of making an article of manufacture having cushioning properties from waste polymeric material, comprising the steps of:
a) granulating a chopped mixture of waste polymeric material, comprising 0 to 40% of aliphatic polyamide material, into fragments at least an order of magnitude smaller than the original size of the waste polymeric material;
b) densifying the granulated mixture into fragments having a more uniform and solid consistency and/or cryogenically grinding said mixture with liquid nitrogen;
c) adding a chemical blowing agent to the mixture; and
d) extruding the mixture,
wherein the blowing agent has a predetermined activation temperature, wherein prior to or during extrusion the blowing agent is thoroughly mixed in the recycled material to obtain a uniform dispersion, wherein the extrusion is carried out at a temperature below said activation temperature, and wherein the extruded product is heated to a temperature above said activation temperature to give an extruded product having individual closed, non-connecting and gas-tight cells uniformly dispersed in a flexible polymer matrix.

According to a further aspect of the invention there is provided an article of manufacture having cushioning properties and comprising a flexible polymeric matrix made from granulated, densified and extruded waste polymeric material having an aliphatic polyamide material content of 0 to 40% and having uniformly dispersed therein individual closed, non-connecting and gas-tight cells imparting said cushioning properties, said article having a density in the range from 288 to 449 kg/m³. The invention also provides a floor covering including a secondary backing made according to the process defined above or from an article of manufacture as defined above, in sheet form. This new floor covering would include both carpet tiles and roll goods of either woven or tufted construction of varying widths. The secondary backing could have a pressure sensitive adhesive layer for removably attaching the new floor covering to a floor.

There is thus provided a new use for thermoplastic scrap material from the manufacture of floor covering or the subsequent removal of the floor covering after installation.

Another object of the present application is to provide building materials, car parking stops, highway guardrail offset blocks, mats, sea walls, sound barrier walls and other similar products made from the recycled and reclaimed scrap material. Other objects and advantages of this invention will become apparent from the following description taken in connection with the accompanying drawings wherein are set forth, by way of illustration and example, certain embodiments of this invention.

The process of the present invention can also include a profile extrusion process that utilizes cooling water for cooling the extruded material to form a desired profile shape and a conveyor gripping motor for pulling the cooled extruded material into a cutting section for cutting the cooled extruded material into a desired size for making various articles of manufacture.

The floor covering of the invention includes, but is not limited to, a carpet or tile having textile fibers defining a fibrous upper face which are tufted into a primary backing or a woven fibrous upper face and a secondary backing in accordance with the invention permanently adhered to the lower surface of the primary backing of the tufted articles or to the lower surface of the woven article.

A low density discontinuous phase secondary backing layer is achieved by the incorporation of a chemical blowing agent accompanied by an activator if required. Other lower density materials may be incorporated along with the densified granulated chopped mixture.

Other useful products including, but not limited to, building materials, car parking stops and highway guardrail offset blocks are also provided. The process for producing these useful products, which are made from the densified recycled and reclaimed scrap materials, may include the use of a profile extrusion process and linear low-density polyethylene (LLDPE) or similar material. The extruded waste material is fed through an extrusion die, which can contain the shape of the desired article of manufacture to further define the final shape of the article of manufacture, is cooled by means of a continuous chilled water bath and upon exiting the chilled water bath is cut while in motion to the desired length or width. Further mechanical processing specific to the final article of manufacture, such as planing, sawing, or drilling may be desired.

Some of the objects and advantages of the invention having been stated, other objects will appear as the description proceeds when taken in conjunction with the accompanying drawings in which:
**Figure 1** is a diagrammatic view of the process for making products in accordance with the present invention.
**Figure 2** is a diagrammatic view of a process for making products in accordance with the present invention by profile extrusion.
**Figure 3** is a front, plan view of a die exit plate of the profile extruder shown in Figure 2.
**Figure 4a and 4b** are side and front views of a sizing die used in the profile extruder shown in Figure 2.
**Figure 5** is a perspective view of an industrial block flooring in accordance with the present invention.
**Figure 6** is a perspective view of a parking stop in accordance with the present invention.
**Figure 7** is an enlarged cross-sectional view of a floor covering.
**Figure 8** is an enlarged cross-sectional view of an alternate floor covering.
**Figure 9** is an enlarged cross-sectional view of a second alternate covering.
**Figure 10** is an enlarged cross-sectional view of a floor covering having a cushioned secondary backing in accordance with the present invention.

In the following it has to be noted, that not all embodiments show the cells (256) in accordance with the invention as defined in claims 1 and 6.

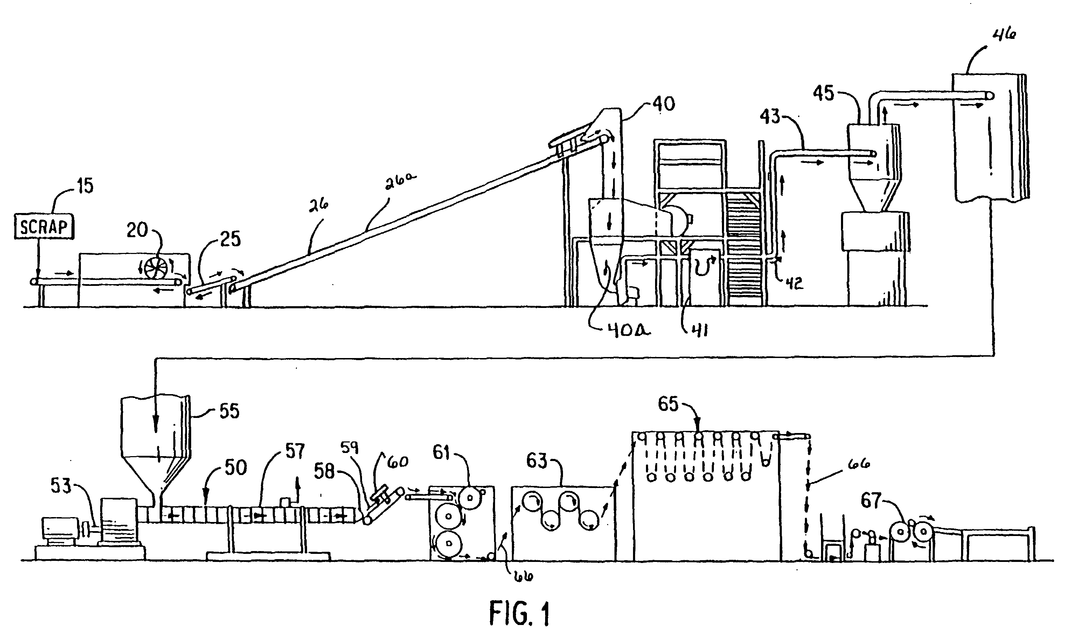

A preferred form of the process is illustrated in Figure 1 wherein waste polymeric material (scrap) 15, such as carpet remnants or carpet tiles, is delivered to a guillotine chopper 20. The waste polymeric material 15 typically comprises a wide variety of thermoplastic material generated during the manufacture of floor coverings and generated in the disposal of used floor coverings. Typical thermoplastic materials that may be present include aliphatic polyamides, polyolefins (e.g., polyethylene and polypropylene), polymers based on vinyl monomers (e.g., vinyl chloride and vinyl esters such as vinyl acetate), polymers based on acrylic monomers (e.g., acrylic acid, methyl acrylic acid, esters of these acids, and acrylonitrile), other thermoplastic polymers, and blends and copolymers thereof. The aliphatic polyamides that are present in the material 15 can range in the amount of about 0 to 40 percent of the total amount of material 15, but are normally approximately 12% of the total amount of material 15. The aliphatic polyamides add strength (stability) to the resulting recycled material 66, such that the aliphatic polyamides increase the tear resistance and breaking strength and decrease the elongation and shrinkage of the resulting recycled material 66. The term "aliphatic polyamide polymer" used herein and throughout the specification may include, but is not limited to, long-chain polymeric or copolymeric amide which has recurring amide groups as an integral part of the main polymer or copolymer chain, which may be in the form of a fiber. Examples of aliphatic polyamides can include nylon 6 or poly (ω-caprolactam); nylon 66 or poly (hexamethylenedia mine-adipic acid) amide; poly (hexamethylenediamine-sebacic acid) amide or nylon 610; and the like. The mixture that is used to produce the resulting recycled material 66 is designed to produce an article of manufacture that has flexible properties such that the article can be rolled or unrolled at room temperature and at colder temperatures.

The guillotine chopper 20 is any conventional guillotine chopper that coarsely chops the waste polymer material into 19 to 25 mm (3/4 to 1 inch) in width portions. A suitable guillotine chopper is Model CT-60 available from Pieret, Inc. The chopped mixture 26a, which is free of most metal, is transported, for example, via conveyer belts 25 and 26 to a granulator 40, which grinds the one inch portions into fragments at least an order of magnitude smaller than the original size of waste polymeric material. Typically this is about 9·5 mm (3/8 inch) and smaller. A suitable granulator is Model 24-1 available from Cumberland Company.

The granulated mixture 40a is transported to a densifier 41. The densifier 41 is designed to heat, melt, and form or compact solid smaller pieces of the granulated mixture 40a such that the extruder 50 can produce a more uniform blend of the resulting recycled material 66. The densifier 41 increases the density of the granulated mixture 40a to form densified material 42 that will be fed to the extruder 50. With the use of the densifier 41, such as a Plastcompactor Pelletizer Model No. CV50, manufactured by HERBOLD ZERKLEINERUNGSTECHNIK GmbH, the density of the granulated material 40a is increased such that the output of the extruder 50 is increased from approximately 454 kg (1,000 lbs). per hour to approximately 1814 to 2721 kg (4,000 to 6,000 lbs.) per hour. The densifier 41 blends the granulated material 40a, which can be in the form of a fluffy, fibrous material with solid polymeric particles to form the densified material 42 which is in the shape of semi-uniform pellets. The densifier 41 has an approximate volume densification ratio of 2:1 (original granulated material to densified material volume).

Alternatively or in combination with the densifier 41, the granulated mixture 40a can be sent via a conveyor 26 to a cryogenic grinder (not shown) that uses liquid nitrogen to freeze and grind the chopped mixture 26a to form a hard shaped cryogenically ground material 42A that is fed into the extruder 50. The densified material 42 and/or the cryogenically ground material 42A is transported via air in a conduit 43 to a Gaylord loading station 45 and/or to a silo 46. If desired, fines, dust and/or fibers can be removed and separated from the densified material 42 and/or the cryogenically ground material 42A.

The densified material 42 and/or the cryogenically ground material 42A is then conveyed to the extruder 50. A suitable extruder is Model 2DS-K 57M32 or ZSK-170 M 1750 10 G, both available from Wemer & Pfleiderer. The extruder 50 includes a control means 53 (e.g., a motor gearbox) and a feeder 55 that is connected to the silo 46 and to additional feeding tubes for accepting different materials. A metal detection station, such as a magnet, is located at the entrance of the feeder 55. Control means 53 is provided to insure that the extruder 50 and feeder 55 act cooperatively to maintain a constant feed condition throughout the conveying zone to a zone comprising one or more kneading zones (not shown). The fed materials then pass through an extruder barrel 57 including a degassing or a vacuum zone and then through a pumping zone which forces the same through a die 58. The pumping zone functions to develop sufficient throughput without creating intolerable back pressures and torque in the preceding zones or on the thrust bearings of the extruder 50. The extruder is operated at a temperature selected to not exceed the temperature at which the largest portion of polymer based vinyl monomers and blends and copolymers thereof waste material decompose, which is about 200°C (390°F to 400°F). Typically, the extruder 50 is operated such that a melt temperature of 182 to 193°C (360°F to 380°F) is maintained as the extruded blend 59 exits the die 58. The extruded blend 59 can pass through a metal detector 60 before being transported to a calender 61, where it is formed into a sheet of recycled material 66 and then cooled at a cooling station 63. The cooled recycled material 66 may be accumulated by an accumulator 65 and then rolled up at a collection station 67. The resulting recycled material 66 can be calendered to form a backing layer for a floor covering that is flexible and can be rolled or easily handled or moved.

Accordingly, exemplary articles of manufacture include secondary backings for floor coverings, components of other building material, such as sound barriers, roofing materials and the like. Further, the resulting recycled material 66 is reduced in density by the addition of a chemical blowing agent, which when activated creates cavities of air. The reduction in density results in the resulting recycled material 66 to have cushioning properties which are known to improve the performance and handling of an article of manufacturing, such as a floor covering utilizing the reduced density resulting recycled material 66 as a secondary backing layer.

The resulting recycled material with cushion properties 66 is produced by adding an azo chemical blowing agent with the recycled material and other additives into the feeder 55. Feeder 55 supplies these materials to the extruder 50. A pelletized azodicarbonamide blowing agent such as Bio-Foam PMA 50 from Rit Chem Company, Inc. can be used. The pellet is composed of 50 % azo blowing agent (ADC 1200 grade) and 50 % PVC and is therefore 50 % active. The average particle size of the blowing agent is 5 µm, which correlates to the average diameter of the circular particle. The optimum particle size is approximately 3 to 4 µm. The decomposition temperature of the active azo ingredient, ADC 1200 is approximately 195° to 220° C (383° to 428° F), however, the decomposition or activation temperature of the pellet ranges from 175° to 185° C (347° to 365° F) with a gas volume of 85 to 115 ml/gram in air. The blowing agent decomposes or is activated at its corresponding activation temperature and releases gases. This release of gas produces a cell or gas pocket (referenced in Figure 10 as 256) in the recycled material 66a in the form of a bubble, cavity or void. Blowing agents can be added in liquid, powder or pellet form. Typical addition levels range from approximately 0.1 to 5% (wt/wt)-based on the percent "active" azodicarbonamide. The optimum additional level is approximately 0.5% (or 0.25% active).

Other alternate chemical blowing agents include, but are not limited to, p-toluene sulfonyl semicarbizide or p,p oxybis benzene sulfonyl hydrazide. The activation or decomposition rate of the blowing agent can be altered through the use of an activator. Suitable activators for azodicarbonamide blowing agents include, but are not limited to, transition metal salts, particularly those of lead, cadmium and zinc or organometallic complexes such as zinc oxides, zinc stearate, or barium stearate. Although dependent on the composition and activation characteristics of the blowing agent, activators are typically added at approximately a 1 to 1 ratio of activator to blowing agent.

Prior to or during extrusion, it is necessary to thoroughly mix the blowing agent and/or activator in the recycled material 66 in order to obtain a uniform dispersion. A uniform mixture is essential to ensure cells or gas pockets exist uniformly in the sheet, therefore, after activation the resulting sheet will be of uniform thickness.

The melt temperature of the reduced density recycled material 66 in the extrudor 50 is kept below the activation temperature of the blowing agent so that the blowing agent in the reduced density recycled material will not be activated during extrusion. After extrusion, the reduced density recycled material 66, is conveyed by conveyor to the calender 61 where it is formed into a sheet. Once a sheet is formed, the sheet is heated above the activation temperature of the blowing agent causing it to release gas and form cells or gas pockets 256 in the reduced density recycled material 66A. The cells 256 reduce the density and increase the thickness of the sheet. For example, at a blowing agent level of approximately 0.5% (0.25% active), a sheet made from reduced density recycled material 66A of approximately 889 µm (35 mils) can reach a thickness of approximately 2.79 mm (110 mils or 0.110 inches) (approximately 3 times its original thickness) after activation. The sheet produced from reduced density recycled material 66A is reduced in density from approximately 1362 kg/m³ (85 lbs/ft³) at 889 µm (35 mils) thickness to approximately 432.5 kg/m³ (27 lbs/ft³) at 2.74 mm (110 mils) thickness. An ideal density for a commercial carpet backing ranges from approximately 288 kg/m³ (18 lbs/ft³) to 449 kg/m³ (28 lbs/ft³). The density chosen within this range is application specific. For example, in applications where considerable rolling traffic is prevalent a higher density in the upper end of the range is preferred.

In order for a carpet backing to be considered a cushion, it must be comprised of "cells" or air spaces 256. The cells 256 of the cushion must be intentional, individual, non-connecting and gas tight for the structure of the cushion to be considered closed-cell. Additionally, the cells 256 must be incorporated into a flexible polymer matrix. This structure provides a cushioning effect by allowing the carpet backing to compress under an external load and recover when the load is removed.

The density of the recycled material 66 can also be reduced by the incorporation of other materials having a lower-density than recycled material 66 into the extruder 50 through the feeder 55. The incorporation of a recycled or waste material having a lower density would be desired due to the positive environmental impact. This may include, but is not limited to, materials having a lower density than the recycled material 66 such as ethylene vinyl acetate, polyethylene, wood flour and the shells of crustaceans having a chitinous or calcareous and chitinous exoskeleton. Lower density materials may include those that contain air such as coarsely ground thermoset foam, or hollow microspheres.

After a sheet is made from the reduced density recycled material 66, it is fused by lamination to the remainder of the carpet components to form the finished product thereby attaching the backing layer as an integral part of the floor covering. A sheet from the reduced density recycled material 66 could also be used as a separate pad or cushion for carpeting.

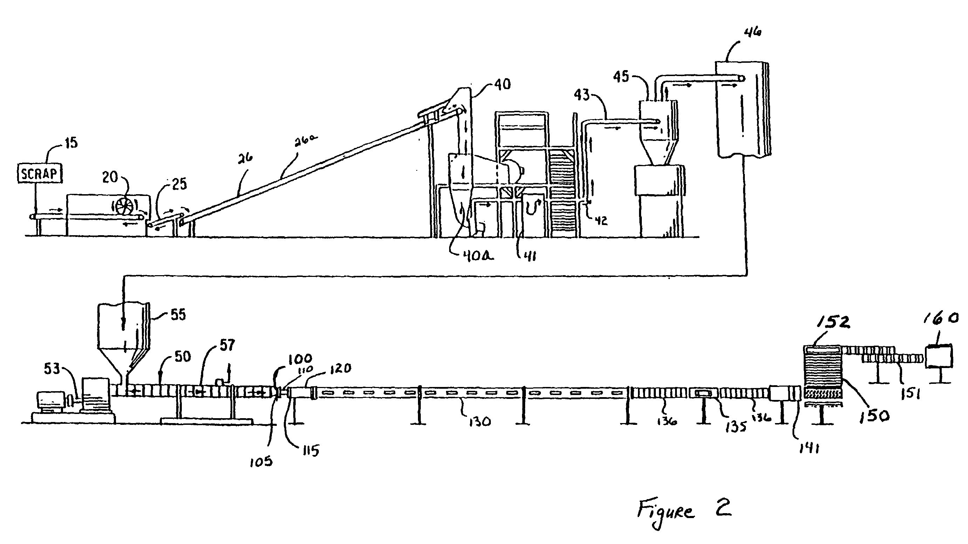

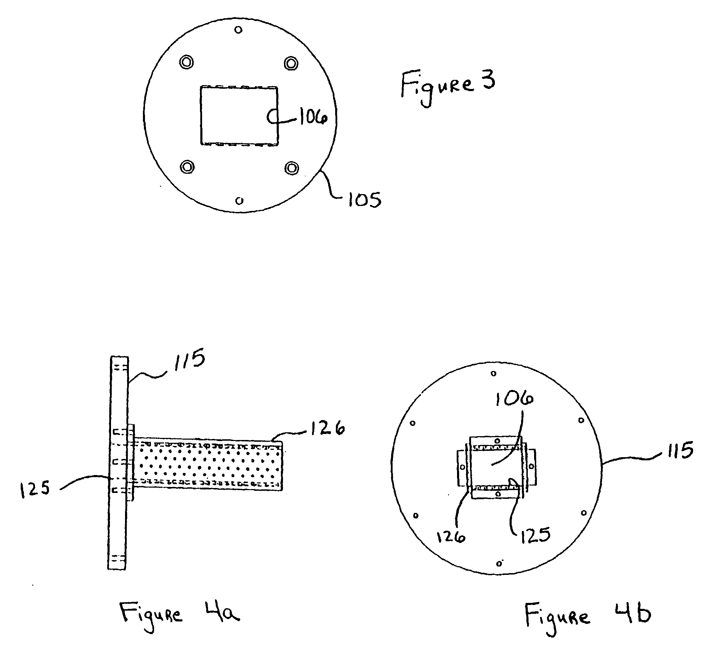

Referring now to Figures 2 and 3, an alternate embodiment of the process illustrated in Figure 1 is shown wherein the extruder 50 has an extruder die 100 with a die exit plate 105 that has an opening with a rectangular shape 106, but can have different shapes, including, but not be limited to, a trapezoid shape, a square shape, circular or conical shapes, etc. The densified material 42 and/or the cryogenically ground material 42A is conveyed to the extruder 50 and exits the extruder 50 through the die exit plate 105 as an extruded blend 110 that has acquired the shape 106 of the die exit plate 105. The extruded blend 110 is pushed into a sizing die 115, shown in Figures 4a and 4b, located within a sizing cooling section 120 that may be connected to a water cooling section 130. The sizing die 115 is positioned adjacent to the die exit plate 105, but allows the extruded blend 110 to air cool prior to entering the sizing die 115. The sizing die 115 has an opening 125 with the same shape 106 as the opening in the die exit plate 105, and has an extension 126 that is approximately 46 cm (18 inches) long that also has the same shape 106 of the die exit plate 105.

The extruded blend 110 travels through the sizing cooling section 120 into the water cooling section 130, which is approximately 18·3 m (60 feet) long. At the far end of the water cooling section 130 is a conveyor pulling motor 135 that grips and pulls the extruded blend 110 through the water cooling section 130. Chilled water is circulated through the sizing cooling section 120 and the water cooling section 130. The chilled water enters the sizing cooling section 120 at approximatel 3°C (38°F) and exits the water cooling section 130 at approximately 17°C (62°F). The water is then sent to a heat exchanger unit (not shown) for recooling the water before the water is recycled back into the sizing cooling section 120 and the water cooling section 130. The conveyor pulling motor 135 grips and pulls the extruded material 110 through the water cooling section 130 at a rate of approximately 1.46 m (4.8 feet) per minute. The extruded material 110 enters the sizing cooling section 120 at a temperature of approximately 166 to 171°C (330°F to 340°F), and exits the water cooling section 130 at a temperature of approximately 82°C (180°F) or less. By cooling the extruded blend 43 to 82°C (110 to 180°F) or less, the extruded blend 110 is able to maintain the shape 106 acquired from the die exit plate 105 and the sizing die 115.

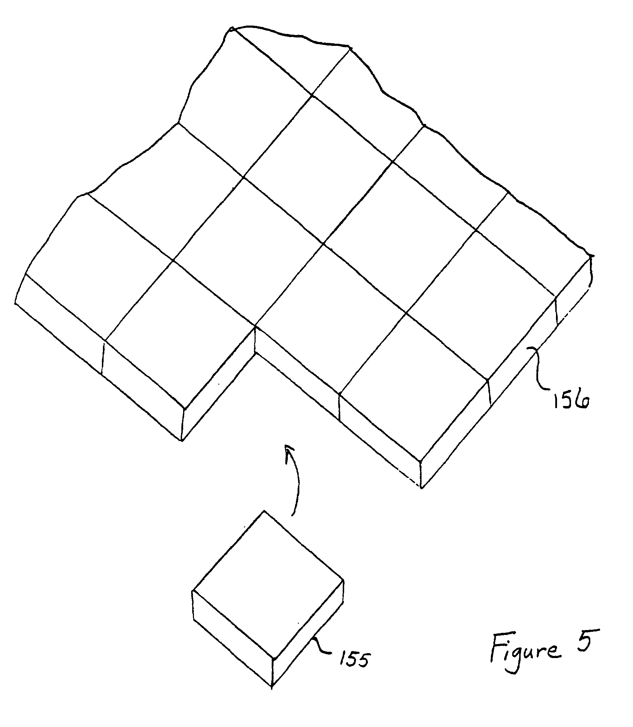

The conveyor pulling motor 135 pulls and conveys the extruded blend 110 through the use of conveyors 136 into a rotating circular saw 141 that cuts the extruded blend 110 into pieces 150 which are approximately 1·83 m (six feet) in length that can be used as a building material. The pieces 150 can be conveyed through conveyors 151 to a planar saw 152 to adjust the acquired shape of the extruded blend 110. The pieces 150 are then conveyed to a stacking station 160 for stacking the pieces 150. The pieces 150 can then be cut into smaller pieces 155, as shown in Figure 5, for use as building material that when connected together can form, for example, a block floor covering 156.

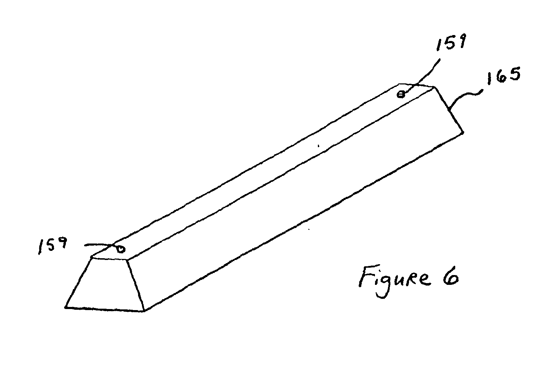

Alternatively, the pieces 150 can have holes 159 drilled into the ends of the pieces 150 at the drill press station (not shown) to form parking stop strips 165, as shown in Figure 6, prior to being stacked. The pieces 150 can still be used as parking stop strips 165 without having any drilled holes 159.

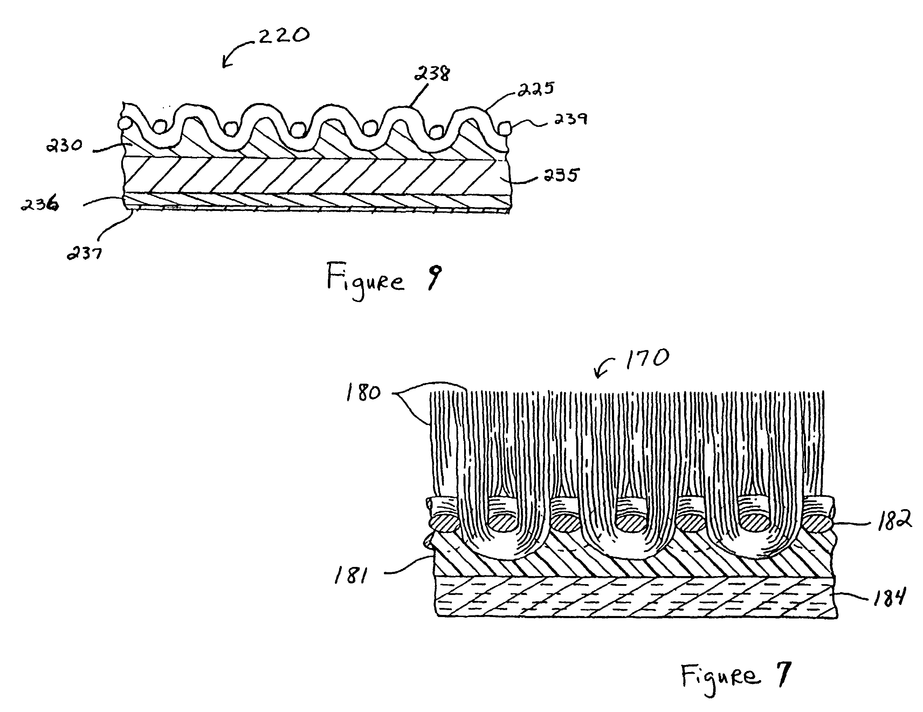

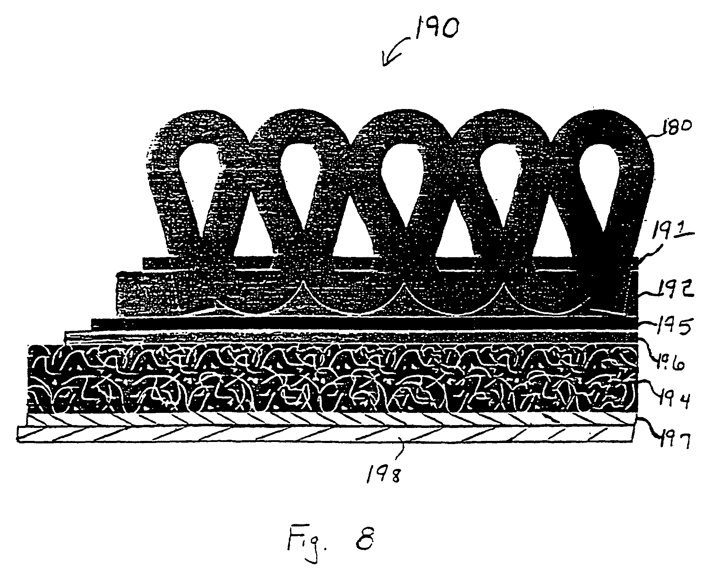

Referring now to Figures 1 and 7, articles that can be made from the process described and illustrated in Figure 1, include a floor covering 170 (e.g. a pile carpet or a mat) . As shown in Figure 7, tufted pile yarns 180 are looped through a primary backing 182, and extend upwardly therefrom. The backcoating 181 is an adhesive coating that fixes the pile yarns 180 in place in the primary backing 182. A secondary backing 184, which is made from the resulting recycled material 66, is then adhered to the primary backing 182 using the backcoating 181 or another adhesive. The primary backing 182 may be formed by weaving synthetic fibers, such as polypropylene, polyethylene, nylon, or polyester, for example, or may be a nonwoven construction utilizing one or more of these thermoplastic polymers. As is conventional, the pile yarns 180 may be cut to form cut pile tufts as illustrated in Figure 7, or may form loops as shown in Figure 8.

The backcoating 181 may be comprised of any suitable polymer compound. Typically, the backcoating 181 is comprised of either a polymer emulsion polymerization product or a polymer plastisol compound. The backcoating 181 is cured on the textile material by heating or drying or in any way reacting the backcoating 181 to cure, cross link or fuse it to the textile material. An exemplary emulsion polymerization product includes a polyvinylidene chloride or ethylene vinyl copolymer with at least one acrylic monomer. Standard acrylic monomers include, for example, acrylic acid, methyl acrylic acid, esters of these acids, or acrylonitrile. Alternatively, the backcoating 181 may comprise conventional thermoplastic polymers which are applied to the carpet by hot melt coating techniques known in the art.

To bond the secondary backing 184 to the backcoating 181, additional heat is applied to both the secondary backing 184 and the backcoating 181 before pressing the two layers together. The secondary backing 184 is contacted with the backcoating 181. The temperature is sufficient to partially melt the contacting surfaces of both the backcoating 181 and the secondary backing 184 thereby bonding the secondary backing 184 to the backcoating 181 forming an integral structure, such as described in US-A-3,560,284 and 3,695,987 to Wisotzky. Furthermore, the secondary backing 184 is made from the reduced density resulting recycled material 66 that has a reduced density layer which provides for cushioned properties.

A second embodiment of a floor covering utilizing the resulting recycled material 66 is shown in Figure 8. A floor covering 190, which may be formed in the shape of a tile or a mat, is shown having looped pile yams 180 tufted or looped through a primary backing 191 and extending upwardly therefrom. As is conventional, the pile yams 180 may be cut to form cut pile tufts as illustrated in Figure 7. A backcoating 192, which is an adhesive coating, is used to fix the pile yams 180 in place in the primary backing 191. A stabilizing reinforcement layer 195 and a fusion coat or plastisol adhesive layer 196 are located between the backcoating 192 and a secondary backing 194. The secondary backing 194 can be made from the resulting recycled material 66. The fusion coat or plastisol adhesive layer 196 and the secondary backing 194 are heated before being pressed together to form the floor covering 190. Adhered onto the bottom surface of the secondary backing 194 is an aqueous, pressure sensitive oleophobic adhesive layer 197, as set forth in US-A-4,849,267 for a Foam Backed Carpet with Adhesive Surface and Method of Installing Same. A releasable cover or liner 198 may be removably attached to the oleophobic adhesive layer 197.

Additionally, some carpet remnants, especially carpet tiles contain fiberglass reinforcement material. In recycling the carpet remnants and/or carpet tiles as scraps 15, the fiberglass, through the above-mentioned chopping and grinding process, is reduced to small pieces. The round, short, cylindrical pieces of fiberglass may plate out onto or be located on the surface allowing the possibility for release when handling the resulting recycled material 66. The oleophobic adhesive layer 197 encapsulates any fiberglass fibers on the surface of the resulting recycled material 66, now the secondary backing 194.

The oleophobic adhesive layer 197 also accelerates equilibrium of moisture regain in the hydrophillic components of the secondary backing 194. The extrusion process and/or the heating process results in a near bone dry condition of the hydrophillic components. The oleophobic adhesive layer 197 reintroduces moisture into the resulting recycled material 66, which is now the secondary backing 194. The forced drying of the oleophobic adhesive layer 197 once applied to the secondary backing 194 additionally improves the resulting stability of the floor covering 190. The use of an oleophobic adhesive layer 197 and releasable cover 198 can be applied to the secondary backing 184 of the floor covering 170. Also, the secondary backing 194 can be made from the recycled material 66 that has a reduced density layer which provides for cushioning properties. The floor coverings 170 and 190 can be formed in the shape of a tile.

A third embodiment of a floor covering utilizing the resulting recycled material 66 would be similar to that shown in Figure 8, except that the layer 196 could be made directly from the resulting recycled material 66. This makes layer 196 now become the secondary backing layer and eliminates the need to have the backing layer 194. As previously discussed, the oleophobic adhesive layer 197, which would be placed against the layer 196, accelerates the equilibrium of moisture gain in the hydrophillic components of the resulting recycled material 66, which now is the layer 196.

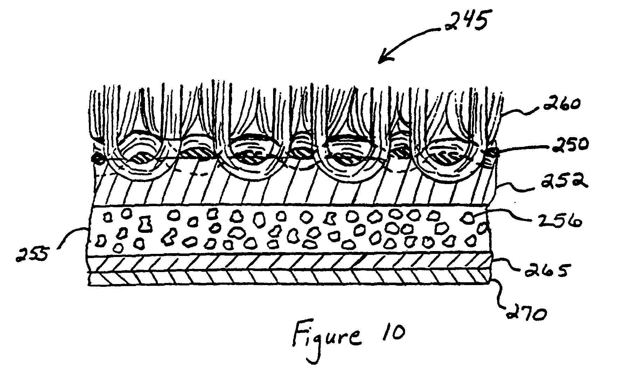

Referring now to Figure 9, a woven floor covering 220, which may be in the shape of a tile, is shown. The woven floor covering 220, as set forth in pending U.S. Patent Application Serial Number 08/388,986, for Woven Floor Coverings, the disclosure of which is incorporated herein in its entirety, is shown having a woven carpet layer 225, a resin composition 230, a backing layer 235, and optionally a releasable oleophobic adhesive layer 236 with a releasable cover 237. The woven carpet layer 225 is formed by weaving warp yams 238 and weft yams 239 to provide a decorative face surface. The backing layer 235 can be made from the resulting recycling material 66. The oleophobic adhesive layer 236, as discussed above, is used to encapsulate fiberglass on the surface of the backing layer 235 and accelerate the equilibrium of moisture gain in the hydrophillic components of the resulting recycled material 66, which is now the backing layer 235.

Referring now to Figure 10, a cushioned floor covering 245 is shown. The cushioned floor covering may be in the shape of a tile or a rolled carpet. The cushioned floor covering 245 is shown having pile yarns 260 that are looped through a primary backing 250 and extending upwardly therefrom. The pile yarns 260 are then cut. Alternatively, the pile yarns 260 do not have to be cut, as shown in Figure 8. A backcoating 252. which is an adhesive coating, fixes the pile yarns 260 in the primary backing 250. A secondary backing 255, which is made from the reduced density resulting recycled material 66A and provides for cushioning properties, is adhered to the primary backing 250 using the backcoating 252. The secondary backing 255 has air pockets or cavities 256 formed within the backing layer. An oleophobic adhesive layer 265 and a releasable cover 270 may be adhered to the secondary backing 255.

The above-described processes and the articles utilizing the same provide for the recycling of waste polymeric material that can include from 0 to 40% aliphatic polyamide material and vinyl monomer and copolymer components. The waste material is granulated, preferably to a particle size of 10 mm or less, and densified. The chopped mixture is usually formed into pelletized fragments for extruding, preferably at a melt temperature range of 182° to 193°C (360° to 380°F). Articles, such as floor coverings, can be made utilizing the recycled article of manufacture.

## Claims

1. A method of making an article of. manufacture having cushioning properties from waste polymeric material, comprising the steps of:
a) granulating a chopped mixture of waste polymeric material (15), comprising 0 to 40% of aliphatic polyamide material, into fragments (40a) at least an order of magnitude smaller than the original size of the waste polymeric material;
b) densifying the granulated mixture into fragments having a more uniform and solid consistency and/or cryogenically grinding said mixture with liquid nitrogen;
c) adding a chemical blowing agent to the mixture; and
d) extruding the mixture,
wherein the blowing agent has a predetermined activation temperature, wherein prior to or during extrusion the blowing agent is thoroughly mixed in the recycled material to obtain a uniform dispersion, wherein the extrusion is carried out at a temperature below said activation temperature, and wherein the extruded product is heated to a temperature above said activation temperature to give an extruded product having individual closed, non-connecting and gas-tight cells (256) uniformly dispersed in a flexible polymer matrix.

2. A method according to claim 1 wherein the extruded material is formed into a sheet.

3. A method according to claim 2 wherein the sheet is laminated to a floor covering as a backing therefor.

4. A method according to any preceding claim wherein the waste polymeric material is coarsely chopped prior to the granulation step (a).

5. A method according to any preceding claim wherein in the densification step (b) the granulated material is formed into pellets.

6. An article of manufacture (255) having cushioning properties and comprising a flexible polymeric matrix made from granulated, densified and extruded waste polymeric material having an aliphatic polyamide material content of 0 to 40% and having uniformly dispersed therein individual closed, non-connecting and gas-tight cells (256) imparting said cushioning properties, said article having a density in the range from 288 to 449 kg/m³.

7. An article according to claim 4 in the form of a sheet.

8. A floor covering (170, 190, 220, 245) having a sheet according to claim 7 as a secondary backing layer.

9. A floor covering (170) according to claim 8 comprising a carpet having textile fibers (180) defining a fibrous upper outer face and a primary backing (182) to which the textile fibers are secured, with the secondary backing layer (184) adhered to the lower surface of the primary backing.

10. A floor covering (220) according to claim 8 comprising a carpet having textile fibers (225) defining a fibrous upper outer face wherein the textile fibers are woven and secured into the secondary backing layer (235).

11. A floor covering according to claim 9 or claim 10 wherein an oleophobic adhesive layer (197, 265) is positioned to overlie and adhere to the secondary backing layer (194, 235), and a releasable cover (198, 237) is removably attached to the oleophobic adhesive layer.

12. A floor covering according to claim 11 wherein the secondary backing layer (194, 235) has glass fibers on the surface immediately adjacent to the oleophobic adhesive layer (197, 265), the oleophobic adhesive layer encapsulating the glass fibers.

13. A floor covering according to any one of claims 8 to 12 which is formed in a shape of a carpet tile.

## Patentansprüche

1. Verfahren zur Herstellung eines Herstellungsartikels mit Dämpfungseigenschaften aus polymerem Abfallmaterial, umfassend die folgenden Schritte:
a) Granulieren eines zerhackten Gemischs aus polymerem Abfallmaterial (15), das 0 bis 40 % aliphatisches Polyamidmaterial umfasst, zu Fragmenten (40a), die wenigstens eine Größenordnung kleiner sind als das ursprüngliche polymere Abfallmaterial;
b) Verdichten des granulierten Gemischs zu Fragmenten mit einer einheitlichen und festen Konsistenz und/oder kryogenes Schleifen des genannten Gemischs mit flüssigem Stickstoff;
c) Zugeben eines chemischen Blähmittels zu dem Gemisch; und
d) Extrudieren des Gemischs,
wobei das Blähmittel eine vorbestimmte Aktivierungstemperatur hat, wobei vor oder während der Extrusion das Blähmittel sorgfältig in dem recycelten Material vermischt wird, so dass eine gleichförmige Dispersion entsteht, wobei die Extrusion bei einer Temperatur unter der genannten Aktivierungstemperatur erhitzt wird, und wobei das extrudierte Produkt auf eine Temperatur über der genannten Aktivierungstemperatur erhitzt wird, so dass ein extrudiertes Produkt entsteht, das individuelle geschlossene, unverbundene und gasdichte Zellen (256) aufweist, die gleichförmig in einer flexiblen Polymermatrix dispergiert sind.

2. Verfahren nach Anspruch 1, bei dem das extrudierte Material zu einem Bogen geformt wird.

3. Verfahren nach Anspruch 2, bei dem der Bogen auf einen Fußbodenbelag als Trägerschicht für diesen laminiert wird.

4. Verfahren nach einem der vorherigen Ansprüche, bei dem das polymere Abfallmaterial vor dem Granulationsschritt (a) grob zerhackt wird.

5. Verfahren nach einem der vorherigen Ansprüche, bei dem das granulierte Material in dem Verdichtungsschritt (b) zu Pellets geformt wird.

6. Herstellungsartikel (255) mit Dämpfungseigenschaften, umfassend eine flexible Polymermatrix aus einem granulierten, verdichteten und extrudierten polymeren Abfallmaterial mit einem aliphatischen Polyamidmaterialgehalt von 0 bis 40 %, wobei individuelle geschlossene, unverbundene und gasdichte Zellen (256) gleichförmig darin dispergiert sind, die die genannten Dämpfungseigenschaften verleihen, wobei der genannte Artikel eine Dichte im Bereich von 288 bis 449 kg/m³ hat.

7. Artikel nach Anspruch 4 in der Form eines Bogens.

8. Fußbodenbelag (170, 190, 220, 245) mit einem Bogen nach Anspruch 7 als sekundäre Trägerschicht.

9. Fußbodenbelag (170) nach Anspruch 8, umfassend einen Teppich mit eine faserige obere Außenseite definierenden Textilfasern (180) und eine primäre Trägerschicht (182), an der die Textilfasern befestigt sind, wobei die sekundäre Trägerschicht (184) auf die Unterseite der primären Trägerschicht geklebt wird.

10. Fußbodenbelag (220) nach Anspruch 8, umfassend einen Teppich mit Textilfasern (225), die eine faserige obere Außenseite definieren, wobei die Textilfasern gewebt und an der sekundären Trägerschicht (235) befestigt sind.

11. Fußbodenbelag nach Anspruch 9 oder Anspruch 10, bei dem eine oleophobe Haftschicht (197, 265) so positioniert wird, dass sie auf der sekundären Trägerschicht (194, 235) liegt und darauf haftet, und eine ablösbare Abdeckung (198, 237) entfernbar an der oleophoben Haftschicht befestigt ist.

12. Fußbodenbelag nach Anspruch 11, bei dem die sekundäre Trägerschicht (194, 235) Glasfasern auf der Oberfläche unmittelbar neben der oleophoben Haftschicht (197, 265) hat, wobei die oleophobe Haftschicht die Glasfasern einkapselt.

13. Fußbodenbelag nach einem der Ansprüche 8 bis 12, der zu einer Teppichfliese gestaltet wurde.

## Revendications

1. Procédé de fabrication d'un article manufacturé ayant des propriétés d'amortissement à partir de déchet de polymère, comprenant les étapes de :
a) granulation d'un mélange haché de déchet de polymère (15) comprenant 0 à 40% de matière polyamide aliphatique, en fragments (40a) inférieurs d'au moins un ordre de grandeur à la taille d'origine du déchet de polymère ;
b) densification du mélange granulé en fragments ayant une consistance plus uniforme et solide et/ou broyage cryogénique dudit mélange avec de l'azote liquide ;
c) adjonction d'un agent de gonflement chimique au mélange ; et
d) extrusion du mélange,
dans lequel l'agent de gonflement a une température d'activation prédéterminée, dans lequel, avant ou pendant l'extrusion, l'agent de gonflement est entièrement mélangé dans le matériau recyclé pour assurer une dispersion uniforme, dans lequel l'extrusion est effectuée à une température inférieure à ladite température d'activation, et dans lequel le produit extrudé est chauffé à une température supérieure à ladite température d'activation pour donner un produit extrudé ayant des cellules individuelles fermées, non reliées et étanches au gaz (256), uniformément dispersées dans une matrice polymère flexible.

2. Procédé selon la revendication 1, dans lequel le matériau extrudé forme une feuille.

3. Procédé selon la revendication 2 dans lequel la feuille est laminée sur un revêtement de sol comme doublure de celui-ci.

4. Procédé selon l'une quelconque des revendications précédentes dans lequel le déchet de polymère est grossièrement haché avant l'étape de granulation (a).

5. Procédé selon l'une quelconque des revendications précédentes, dans lequel, dans l'étape de densification (b), le matériau granulé est aggloméré en boulettes.

6. Article manufacturé (255) ayant des propriétés d'amortissement et comportant une matrice polymère flexible constituée de déchet de polymère granulé, densifié et extrudé ayant une teneur en matière polyamide aliphatique de 0 à 40% et dans laquelle sont uniformément dispersées des cellules individuelles fermées, non reliées et étanches au gaz (256) conférant lesdites propriétés d'amortissement, ledit article ayant une densité comprise entre 288 et 449 kg/m³.

7. Article selon la revendication 4 sous la forme d'une feuille.

8. Revêtement de sol (170, 190, 220, 245) ayant une feuille selon la revendication 7 comme couche de doublure secondaire.

9. Revêtement de sol (170) selon la revendication 8 comprenant une moquette ayant des fibres textiles (180) définissant une face extérieure supérieure fibreuse et une doublure primaire (182) à laquelle sont fixées les fibres textiles, la couche de doublure secondaire (184) étant collée à la surface inférieure de la doublure primaire.

10. Revêtement de sol (220) selon la revendication 8 comprenant une moquette ayant des fibres textiles (225) définissant une face extérieure supérieure fibreuse dans laquelle les fibres textiles sont tissées et fixées dans la couche de doublure secondaire (235).

11. Revêtement de sol selon la revendication 9 ou la revendication 10 dans lequel une couche adhésive oléophobe (197, 265) est positionnée pour recouvrir la couche de doublure secondaire (194, 235) et y adhérer, et un revêtement détachable (198, 237) est fixé de façon amovible à la couche adhésive oléophobe.

12. Revêtement de sol selon la revendication 11 dans lequel la couche de doublure secondaire (194, 235) a des fibres de verre sur la surface immédiatement adjacente à la couche adhésive oléophobe (197, 265), la couche adhésive oléophobe encapsulant les fibres de verre.

13. Revêtement de sol selon l'une quelconque des revendications 8 à 12, ayant la forme d'une dalle de moquette.
